# EUROPEAN PATENT APPLICATION

(11) **EP 4 769 200 A1**
(43) Date of publication of application: **01.07.2026**
(21) Application number: 25216593.1
(22) Date of filing: 18.11.2025
(51) Int. Cl.: G06F 30/33, G06F 30/367, G06F 119/06, G06F 119/08

(54) **SEMICONDUCTOR TEMPERATURE ESTIMATION SYSTEM**

(30) Priority: 27.12.2024 US 202419003153
(71) Applicant: INTEL Corporation, Santa Clara, CA 95054 (US)
(72) Inventor: BLANC, Lionel, 06500 Menton, Alpes-Maritimes (FR); KRISHNAMOORTHY, Arun, Portland, OR 97229 (US); BRAZIL, Edward, Leixlip, W23 CX68 (IE); PELTIER, Nicolas, 38380 Saint-Laurent-du-Pont (FR); LEBEAUT, Pierre, 38400 Saint-Martin-d-Heres (FR)
(74) Representative: HGF

(57) **Abstract**

Provided is a temperature estimation tool for estimating temperatures in an integrated circuit device from functional block objects in the device.

## Description

### TECHNICAL FIELD

Embodiments relate to the field of electrical design automation (EDA) for integrated circuit devices; and more specifically, to implementing power and temperature simulations.

### BRIEF DESCRIPTION OF THE DRAWINGS

Fig. 1 is a conceptual diagram illustrating how an IC (integrated circuit) design may be transformed into an object based simulation model in accordance with some embodiments.
Fig. 2 is a block diagram showing a thermal and power analysis system in accordance with some embodiments.
Fig. 3 is a flow diagram showing a routine for performing thermal analysis simulations in accordance with some embodiments.
Fig. 4 is a block diagram showing a computing system that may be used for performing temperature estimation in accordance with some embodiments.

### DETAILED DESCRIPTION

During Class test phases, High Volume Manufacturing (HVM) tests are increasingly limited by high temperatures and high spatial and temporal temperature gradients occurring in the circuits, with various negative impacts including performance losses, binning quality, and test throughput reduction. Performance losses can occur in final products because the highest performing products may not be able to be identified. The highest frequency performances may not be determined due to excessive temperatures reached on the silicon. Similarly, drops in binning quality (classification of manufactured chips based on their achievable performance) can occur due to temperature variations over test runs. Finally, test throughput reduction can occur through the introduction of arbitrary idle segments, in test sequences to cool down silicon portions that are near the circuits being tested. Therefore, lack of thermal awareness during test configuration design, debugging and optimization reduces test efficiency, increases test cost, and eventually limits the performance of the final products.

There have been several approaches to redressing these issues. One solution involves limiting the performance of final products to the highest frequency that can be tested and not to the highest frequency that a product is necessarily capable of achieving. Another solution is to integrate preamble "idle" segments in the test sequences to artificially cool down the chip during the test, mitigating the risk to cross the maximum temperature thresholds. However, this approach increases the test time, thereby reducing test throughput and increasing test cost.

Accordingly, new approaches are desired. In some embodiments, a digital model of the HVM test environment is generated. It can take the test binary program as input, and generate key metrics as outputs for decision making (e.g., maximum temperature and temperature gradients) and detailed root cause analysis, e.g., temperature and power maps over time, etc.

There have been numerous advancements in semiconductor technologies such as in packaging such as Embedded Multi-die Interconnect Bridges (EMIB), active interposers and power vias for back side power supply delivery. These advances allow for extremely robust, disaggregated architectures that can combine multiple chips with hundreds of billions of transistors into a relatively compact IC package form factor. However, these products come with higher power densities and fast temperature rises that need to be mitigated when testing devices for reliability and performance. The measured parameters enabling the binning of the produced circuits are thermally sensitive, meaning that they should be measured around a given temperature for accurate characterization. When temperatures change too much over time, larger guard bands must be considered, and in the end, performance is underestimated. Therefore, the temperature gradient (in space and time) is an important metric to consider during testing.

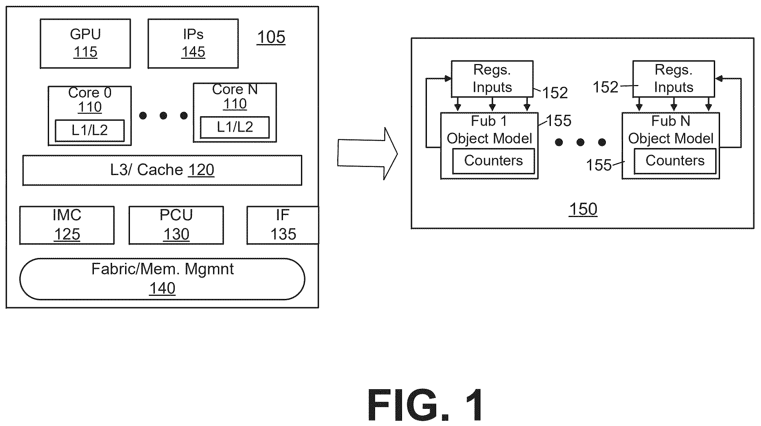

Fig. 1 is a conceptual diagram illustrating how an IC (integrated circuit) design may be transformed into an object based simulation model in accordance with some embodiments. The model is based on partitioning along different functional blocks or functional block components. (As used herein, such functional blocks and functional block components (or elements) are referred collectively as "fubs.")

A processor 105, for example, may have numerous fubs such as CPU cores 110, a GPU 115, an L3 cache block 120, integrated memory controller (IMC) 125, power control unit (PCU) 130, interconnect interface blocks 135, a fabric and memory management system 140, and various other IP (intellectual property) blocks 145. (Note that the term functional block or intellectual property (IP) herein generally refers to any circuitry that performs a particular function. A functional block (fub) may be a unit of logic, circuit, cell, or chip layout. A few examples of fubs include processor cores, memories, caches, floating point processors, memory controllers, bus controllers, graphics processors, transceivers, network interface controllers, and display controllers. It should be appreciated that one or more portions of a larger fub can themselves be designated as a fub. For example, an instruction execution unit and cache interface could be fubs of a parent core fub.

In order to model the hardware fubs into simulation fub objects, they are parsed into a main fub object block 150 including sub fub objects 155 with associated register inputs 152 and state counters. The objects may or may not directly correspond to the functional blocks. That is, they may have overlapping (shared) components for modeling the different fub inputs, outputs and sequentials, and multiple fubs may be used to facilitate one or more of the higher level fubs. In operation, test programs, sequential code corresponding to executable micro-architectural operations, for testing the various different fub blocks is translated, if necessary, into a suitable format and run on a performance simulator, as discussed below.

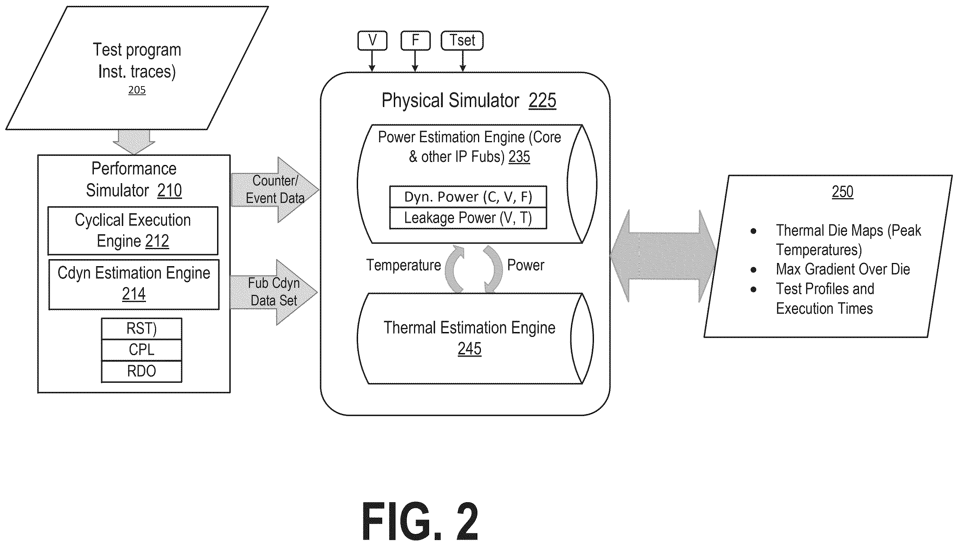

Fig. 2 is a block diagram showing a thermal and power analysis System in accordance with some embodiments. The system generally includes a performance simulator 210 and a physical simulator 225, coupled together as shown. The performance simulator 210 includes a cyclical performance engine 212 and a dynamic capacitance estimation engine 214. The physical simulator 225 includes power and thermal estimation engines 235, 245, respectively. The system receives, in the performance simulator 210 test program instruction traces 205 for a DUT (device under test, e.g., a die or dies in a package) and generates output data 250 including temperature and power estimates for the device (die, package, etc.) being analyzed. As such, the system integrates pre-silicon performance, power, and thermal simulation, enabling the pre-silicon execution of high-volume manufacturing test content into an efficient and useful tool. In some embodiments, it may be used to create or recover tester thermal headroom and decrease test-time as a result. It may also be used to influence test platform hardware decisions for power supply sizing and consequently reduce test cost. Moreover, it may be used to validate new process design rules, e.g., power density violations and improve quality and test costs.

In some embodiments, test programs used for testing the physical device fubs are used for this simulator. The test program binary code is translated into simulation executable instructions for the modeled fub objects in the performance simulator 210. A typical sequence of tests may include about 1000 architectural operations (e.g., simulated micro code execution), which may be composed of a few instruction segments, e.g. reset, cache pre-load, code execution, etc.

The performance simulator generates performance profile vectors that include simulation states for the modeled fub components over a sequence of execution cycles. The states include, for example, fub component counter values, as well as dynamic capacitance estimates for the components, over the simulated execution cycles. (Dynamic capacitances for fub components, e.g., micro-architectural units such as fetch, arithmetic, dynamic speculation, etc.) will vary, depending on their operational states.

The physical simulator 225 includes a power estimate engine 235 and a thermal estimate engine 245. They work together iteratively to generate power and temperature data for the applied performance profile vectors received from performance simulator 210.

The power estimate engine 235 begins with segmented power analysis of the test pattern atomic operation. These results are then saved in a power model database. The initial power state values are provided to an aggregated device (e.g., package, die, core, etc.) power model. An HVM thermal solution (modeled heating/cooling structures) including floorplan details are added. A compact thermal Model is then extracted to enable fast transient simulation. In some embodiments, the temperature PID (proportional integral derivative) control is also included.

Power and thermal behaviors with the test pattern sequence are iteratively co-simulated until either acceptably converged results are attained or until a number of iteration cycles has occurred.

The physical test head design is modeled for the thermal analysis. It includes defining its geometry, material properties, coolers and heaters' location and how to adapt it to the device under test. The control process used to maintain a thermal constraint is, for example, a set of PID (proportional, integral, derivative) controls to regulate a set of temperatures using the heaters and coolers of the test head. These two items are very close and are usually modeled and simulated in a same simulation flow.

In addition to providing power supply and test patterns to the device, the simulator (simulating the actual test station to be used later) also serves to control temperature during test since product performance is tested for specific temperature operating conditions. The test head, equipment surrounding the package during test, can heat a device locations when test patterns do not generate enough self-heating and cool the device when the heat produced is greater than the test specification.

Given the short time granularity of the different test patterns and the power density, one of the greatest challenges is to shorten the heating and cooling thermal path to the die, to finely maintain the die temperature throughout the test. Typical classes of tester properties that can be adjusted for a given test station and device include test head construction around the package (e.g., the thermal interface material that connects the package top side to the test), heat/chill temperature control actuator placement, count and properties, the shape of the pedestal extremity in contact with the different package dies, and the temperature control algorithms which drive the heating and cooling devices.

Thus, in operation, devices may be tested for reliability and performance using specific equipment, including test heads with thermal solutions where control algorithms are used to maintain thermal stability on the chip during the test phase, by dynamically activating heaters and coolers.

The test content (set of instructions) induces a certain power consumption within the device. The simulation components including the thermal solution and temperature control process dissipates whatever heat is generated by the power consumption generated by the test program. To simplify the overall test design process, a divide and conquer approach may be used.

For power/thermal test flow one input is the test program representation, which may be represented as a set of dynamic power maps representing the test sequence. The physical simulator generates a data set 250 describing the power of the fub, and it also may generate temporal and spatial graphs at a configurable resolution sufficient for HVM analysis. In some embodiments, within this framework, it is possible to extract power and thermal maps at each timestep of the simulations, enabling the observation of hotspots as they migrate across a die's floorplan. Additionally, power and thermal maps can be derived from the averaged activities.

It's worth noting that because the fub performance models, alone and as interconnected to each other, can be extremely complex. heuristics may be used to find a suitable instruction sequence that can be simulated efficiently and with accuracy. In some embodiments, a travelling salesman problem (trying to minimize a distance between points) heuristic may be used. The distance may be defined as the thermal gradient between test segment fubs. In some embodiments, a "farthest Insertion" heuristic may be used. It involves inserting a test in the sequence that has the highest gradient from all the test already in the sequence and is adjacent to a test with the closest gradient.

The trials to find the appropriate test sequences will likely involve thermal simulations to predict their impact on the thermal metrics (e.g., Tj max, Tj window). One of the main challenges in these thermal simulations is related to their complexity and scalability. Simulations should be kept short enough in terms of run time to be compliant with the exploration time window (typical is over night) while their complexities keep on increasing. Hundreds of thousands of simulation points over time are typically handled to cover an entire test sequence, and spatial resolutions, e.g., 40 or 50 microns on the most active parts may be desired.

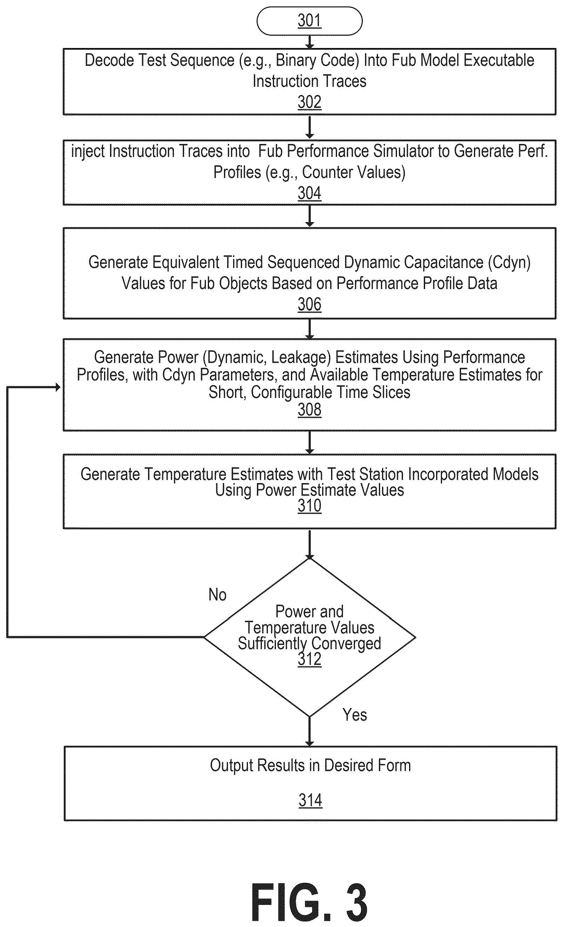

Fig. 3 is a flow diagram showing a routine for performing thermal analysis simulations in accordance with some embodiments. At 302, binary test code sequences are decoded into a trace of fub model executable instructions. Test ordering enhancement in the test sequence s, for example, may be performed using heuristics and/or AI-based algorithms.

At 304, the test instructions are provided to a cycle-accurate device performance simulator to get over-time profiles of performance counter values (e.g., cache L1/L2 hit/miss, etc.). The modeled µ-architectural unit counters enable fine grain spatial power estimation. In this way, the spatial power density distribution, which are at the source of the thermal behavior, can be identified using these performance simulations run over a period of clock execution cycles.

At 306, the sequence of performance counter values are translated into a timed sequence of equivalent dynamic capacitance (Cdyn) values that are added to the performance profile results. This, for example, may be done using an µarchitecture-level calibrated activity model such as an AI-based model using counter values as inputs and from there, inferring the dynamic capacitance values.

At 308, power (dynamic and leakage) estimates are generated using the performance and dynamic capacitance values, along with estimated temperature values if available. This may be done for a short (configurable) time slice.

AT 310, temperature values for specific locations, e.g., pixels, of the DUT (die or dies) are estimated. The estimated power values are injected into the sources of the thermal model to calculate the temperature rises at the DUT pixels over the small time slice. The simulated circuits and tester temperatures are routed into the tester thermal control simulator (activating coolers and/or heaters on the test head).

At 312, the routine determines if the power and temperature values have sufficiently converged to stable steady-state values. If not, the routine loops back to 308 as discussed previously. The power models are refreshed with the new temperatures, as leakage power is highly dependent on temperature, and the routine proceeds to 310 to generate new temperature estimates. This continues until at 312, it is determined that suitable convergence has occurred.

Once this happens, at 314, the results are output in a desired form. Metrics determining testability (e.g., maximum temperatures reached during test) are calculated. Binning quality (temperature gradient over the test sequences) may also be calculated. In some embodiments, temperature predictions at a sufficient spatial granularity may be generated. They may facilitate a time resolution and a time horizon enabling hotspots detection and capture of transient thermal issues - with a simulation speed enabling architecture and design exploration, while still offering a good prediction accuracy.

It should be appreciated that this automated flow can be executed in batch-mode to compare different test configurations or can be driven by an optimization tool to minimize the maximum temperature, the temperature window, and the test sequence duration.

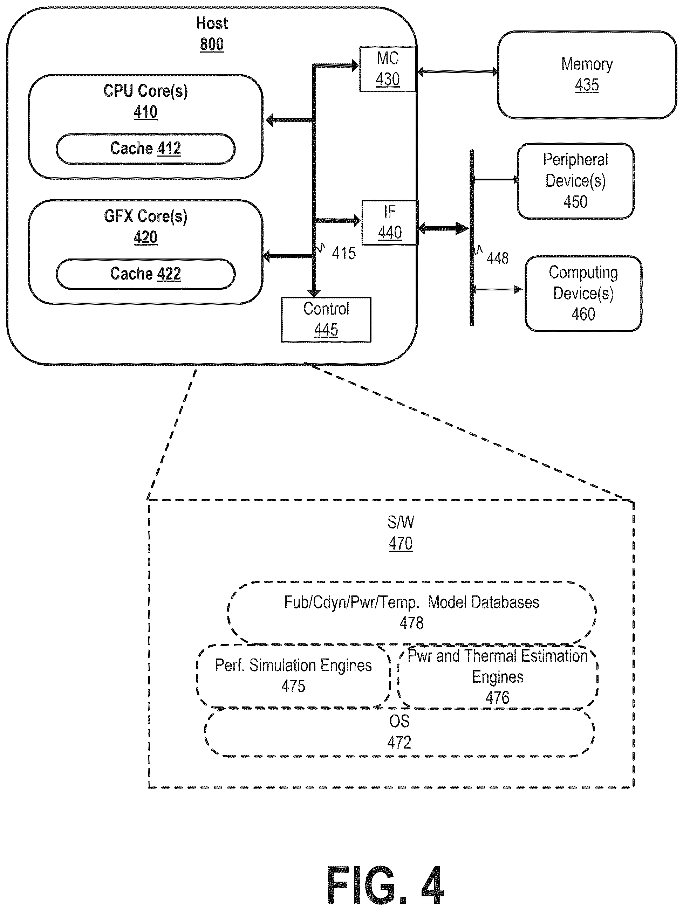

Fig. 4 is a block diagram showing a computing system that may be used for running the various power and temperature estimation and analysis tools described herein. The system generally includes a host processing device 400, which is coupled to external memory 435 and to peripheral devices 450, as well as to other computing devices 460 through interface 848. Interface 448 may be implemented with a combination of one or more point-to-point links, busses, or fabrics and may include multiple networks linking the host to the peripheral devices and to the other computing devices. The system also includes software 470, some or all of which may be stored and run within the depicted system.

The memory 435 may include any suitable memory such as DRAM and/or non-volatile memory systems such as memory servers, solid-state drives and portable memory such as flash drives. The peripheral devices 450 correspond to user interface devices such as displays, keyboards, headsets, and the like.

The host processing device 400 may be implemented with one or more integrated circuits in the same or in multiple packages. It generally includes CPU cores 410 with associated cache 412, graphics processing cores 420 with their associated cache 422, a fabric interconnect system 415, memory controller 430, interface controller 440, and control/Memory block 445, which may encompass various different functional blocks such as low-level shared cache, security management, fabric control, power management, and/or special purpose blocks, chips and/or modules such as ASIC or FPGA assemblies for carrying out various specialized functions.

The software 470 includes an operating system 472, a performance simulation engine 475, a physical power/thermal simulator 476, and associated model databases 478 for housing performance, dynamic capacitance, power and thermal models for different IC designs and different fub objects within those designs. This software could be stored, when not running, wholly or partially, in external host memory 435 or across different storage devices capable of being linked with host 400. Similarly, when running, apart from the OS 472, some or all of the other components could be executed by the host processing device 400, itself, or together by host processing device 400 and other computing devices 460 in a distributed fashion and not necessarily at the same time.

The computing devices 460 include any suitable computing device that can operate apart from, in concert with, or in support of the host processing device 400. For example, a computing device could be a supporting device such as a co-processor, a GPU card, an accelerator, or a special function module such as an FPGA or ASIC module designed for special-purpose processing such as network or AI processing. The computer devices can also include stand-alone devices such as mobile devices, personal computers, server systems, datacenter systems, and the like. It will be appreciated that with many IC design processes, many different design, modeling, simulation, and verification tools may be implemented in one, some or many different computing systems that may or may not be interconnected to one another. For example, it is typical for different design teams to work on their aspects of IC EDA and thus, they may use tools running in different computing systems at different times with files being shared, handed off, returned, modified, reviewed, further processed, etc. Accordingly, embodiments of the methods and physical features described herein may be implemented in many different ways using a variety of computing systems and disaggregated work-flow schemes and thus, the inventive embodiments are not limited to any particular scheme.

Illustrative examples of the technologies disclosed herein are provided below. An embodiment of the technologies may include any one or more, and any compatible combination of, the examples described below.

Example 1 is a system that includes a performance simulator to simulate modeled functional block (fub) objects from an integrated circuit (IC) and generate a performance profile including time-cycled performance values. It also includes a physical simulator including a power estimation engine to generate power values for the Fub objects and a thermal estimation engine to generate temperature data for the fub objects based on the generated power values, wherein the power and thermal estimation engines are coupled together to iteratively generate resultant power and temperature values for the fub object.

Example 2 includes the subject matter of example 1, and wherein the performance simulator is to execute test instruction traces translated from one or more test programs.

Example 3 includes the subject matter of any of examples 1-2, and wherein the time-cycled performance values include micro-architectural counter values.

Example 4 includes the subject matter of any of examples 1-3, and wherein the time-cycled performance values include dynamic capacitance values.

Example 5 includes the subject matter of any of examples 1-4, and wherein the thermal estimation engine includes test station models for modeling a physical test station.

Example 6 includes the subject matter of any of examples 1-5, and wherein the test station models include test head models to model thermal parameters based on geometry and materials for a physical test head that is to be mounted with the integrated circuit.

Example 7 includes the subject matter of any of examples 1-6, and wherein the test station models include temperature control parameters for heaters and coolers used with the physical test head.

Example 8 includes the subject matter of any of examples 1-7, and wherein the power values include both dynamic and leakage power values.

Example 9 includes the subject matter of any of examples 1-8, and wherein the physical simulator is to generate a temperature grid graph of at least a portion of the integrated circuit based on the resultant temperature values.

Example 10 includes the subject matter of any of examples 1-9, and wherein the temperature grid graph is to generate temperature pixel information corresponding to regions of the integrated circuit less than 40 square microns.

Example 11 is a method that includes injecting instruction traces into an integrated circuit (IC) performance simulator to generate a performance profile. It also includes generating equivalent timed sequenced dynamic capacitance values for functional block objects of the IC based on the performance profile. It also includes generating power estimates using the performance profile and dynamic capacitance estimates. It also includes generating temperature estimates for the functional blocks using one or more physical test station models based on the power estimates. It also includes iteratively generating subsequent power and temperature values, wherein the subsequent power values are based on the subsequent temperature values, and the subsequent temperature values are based on the subsequent power values. It also includes identifying resultant power and temperature values from the subsequent power and temperature values.

Example 12 includes the subject matter of example 11, and wherein the power estimates are based on dynamic and static power estimates.

Example 13 includes the subject matter of any of examples 11-12, and wherein generating power estimates using the performance profile and dynamic capacitance estimates includes using a sub-time slice of the performance profile.

Example 14 includes the subject matter of any of examples 11-13, and wherein the performance profile includes micro-architectural counter values.

Example 15 includes the subject matter of any of examples 11-14, and comprising decoding test sequence code into fub model executable instruction traces.

Example 16 is a computing system that includes a server and memory. The memory includes instructions that when executed in the server cause it to inject instruction traces into an integrated circuit (IC) performance simulator to generate a performance profile; generate equivalent timed sequenced dynamic capacitance values for functional block objects of the IC based on the performance profile; generate power estimates using the performance profile and dynamic capacitance estimates; generate temperature estimates for the functional blocks using one or more physical test station models based on the power estimates; iteratively generate subsequent power and temperature values, wherein the subsequent power values are based on the subsequent temperature values, and the subsequent temperature values are based on the subsequent power values; and identify resultant power and temperature values from the subsequent power and temperature values.

Example 17 includes the subject matter of example 16, and wherein the power estimates are based on dynamic and static power estimates.

Example 18 includes the subject matter of any of examples 16-17, and wherein generating power estimates using the performance profile and dynamic capacitance estimates includes using a sub-time slice of the performance profile.

Example 19 includes the subject matter of any of examples 16-18, and wherein the performance profile includes micro-architectural counter values.

Example 20 includes the subject matter of any of examples 16-19, and comprising decoding test sequence code into fub model executable instruction traces.

As used in this specification, the term "embodiments," or "other embodiments" means that a particular feature, structure, or characteristic described in connection with the embodiments is included in at least some embodiments, but not necessarily all embodiments. The various appearances of "an embodiment," "one embodiment," or "some embodiments" are not necessarily all referring to the same embodiments. If the specification states a component, feature, structure, or characteristic "may," "might," or "could" be included, that particular component, feature, structure, or characteristic is not required to be included. If the specification or claim refers to "a" or "an" element, that does not mean there is only one of the elements. If the specification or claims refer to "an additional" element, that does not preclude there being more than one of the additional elements.

Throughout the specification, and in the claims, the term "connected" means a direct connection, such as electrical, mechanical, or magnetic connection between the things that are connected, without any intermediary devices.

The term "coupled" means a direct or indirect connection, such as a direct electrical, mechanical, or magnetic connection between the things that are connected or an indirect connection, through one or more passive or active intermediary devices.

The term "circuit" or "module" may refer to one or more passive and/or active components that are arranged to cooperate with one another to provide a desired function. Different circuits or modules may share or even consist of common components. for example, A controller circuit may be a circuit to perform a first function and at the same time, the same controller circuit may also be a circuit to perform another function, related or not related to the first function.

The term "signal" may refer to at least one current signal, voltage signal, magnetic signal, or data/clock signal. The meaning of "a," "an," and "the" include plural references. The meaning of "in" includes "in" and "on."

The terms "substantially," "close," "approximately," "near," and "about," generally refer to being within +/-10% of a target value.

Unless otherwise specified the use of the ordinal adjectives "first," "second," and "third," etc., to describe a common object, merely indicate that different instances of like objects are being referred to and are not intended to imply that the objects so described must be in a given sequence, either temporally, spatially, in ranking or in any other manner.

For the purposes of the present disclosure, phrases "A and/or B" and "A or B" mean (A), (B), or (A and B). For the purposes of the present disclosure, the phrase "A, B, and/or C" means (A), (B), (C), (A and B), (A and C), (B and C), or (A, B and C).

It is pointed out that those elements of the figures having the same reference numbers (or names) as the elements of any other figure can operate or function in any manner similar to that described but are not limited to such.

Furthermore, the particular features, structures, functions, or characteristics may be combined in any suitable manner in one or more embodiments. For example, a first embodiment may be combined with a second embodiment anywhere the particular features, structures, functions, or characteristics associated with the two embodiments are not mutually exclusive.

A circuit design processed as described herein may be implemented within an IC. In one or more embodiments, the circuit design may be processed by a system to generate a configuration bitstream that may be loaded into an IC to physically implement the circuitry described by the processed circuit design within the IC.

As defined herein, the term "computer readable storage medium" means a storage medium that contains or stores program code for use by or in connection with an instruction execution system, apparatus, or device. As defined herein, a "computer readable storage medium" is not a transitory, propagating signal per se. A computer readable storage medium may be, but is not limited to, an electronic storage device, a magnetic storage device, an optical storage device, an electromagnetic storage device, a semiconductor storage device, or any suitable combination of the foregoing. Memory elements, as described herein, are examples of a computer readable storage medium. A non-exhaustive list of more specific examples of a computer readable storage medium may include: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing.

As defined herein, the term "output" means storing in physical memory elements, e.g., devices, writing to display or other peripheral output device, sending or transmitting to another system, exporting, or the like.

As defined herein, the term "responsive to" means responding or reacting readily to an action or event. Thus, if a second action is performed "responsive to" a first action, there is a causal relationship between an occurrence of the first action and an occurrence of the second action. The term "responsive to" indicates the causal relationship.

As defined herein, the terms "one embodiment," "an embodiment," or similar language mean that a particular feature, structure, or characteristic described in connection with the embodiment is included in at least one embodiment described within this disclosure. Thus, appearances of the phrases "in one embodiment," "in an embodiment," and similar language throughout this disclosure may, but do not necessarily, all refer to the same embodiment.

As defined herein, the term "processor" means at least one hardware circuit configured to carry out instructions contained in program code. The hardware circuit may be an integrated circuit. Examples of a processor include, but are not limited to, a central processing unit (CPU), an array processor, a vector processor, a digital signal processor (DSP), a field-programmable gate array (FPGA), a programmable logic array (PLA), an application specific integrated circuit (ASIC), programmable logic circuitry, a graphics processing unit (GPU), a controller, and so forth.

A computer program product may include a computer readable storage medium (or media) having computer readable program instructions thereon for causing a processor to carry out aspects of the inventive arrangements described herein. Within this disclosure, the term "program code" is used interchangeably with the term "computer readable program instructions." Computer readable program instructions described herein may be downloaded to respective computing/processing devices from a computer readable storage medium or to an external computer or external storage device via a network, for example, the Internet, a LAN, a WAN and/or a wireless network. The network may include copper transmission cables, optical transmission fibers, wireless transmission, routers, firewalls, switches, gateway computers and/or edge devices including edge servers. A network adapter card or network interface in each computing/processing device receives computer readable program instructions from the network and forwards the computer readable program instructions for storage in a computer readable storage medium within the respective computing/processing device.

Computer readable program instructions for carrying out operations for the inventive arrangements described herein may be assembler instructions, instruction-set-architecture (ISA) instructions, machine instructions, machine dependent instructions, microcode, firmware instructions, or either source code or object code written in any combination of one or more programming languages, including an object oriented programming language and/or procedural programming languages. Computer readable program instructions may include state-setting data. The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a LAN or a WAN, or the connection may be made to an external computer (for example, through the Internet using an Internet Service Provider). In some cases, electronic circuitry including, for example, programmable logic circuitry, an FPGA, or a PLA may execute the computer readable program instructions by utilizing state information of the computer readable program instructions to personalize the electronic circuitry, in order to perform aspects of the inventive arrangements described herein.

Certain aspects of the inventive arrangements are described herein with reference to flowchart illustrations and/or block diagrams of methods, apparatus (systems), and computer program products. It will be understood that each block of the flowchart illustrations and/or block diagrams, and combinations of blocks in the flowchart illustrations and/or block diagrams, may be implemented by computer readable program instructions, e.g., program code.

These computer readable program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions may also be stored in a computer readable storage medium that can direct a computer, a programmable data processing apparatus, and/or other devices to function in a particular manner, such that the computer readable storage medium having instructions stored therein comprises an article of manufacture including instructions which implement aspects of the operations specified in the flowchart and/or block diagram block or blocks.

The computer readable program instructions may also be loaded onto a computer, other programmable data processing apparatus, or other device to cause a series of operations to be performed on the computer, other programmable apparatus or other device to produce a computer implemented process, such that the instructions which execute on the computer, other programmable apparatus, or other device implement the functions/acts specified in the flowchart and/or block diagram block or blocks.

The flowchart and block diagrams in the figures illustrate the architecture, functionality, and operation of possible implementations of systems, methods, and computer program products according to various aspects of the inventive arrangements. In this regard, each block in the flowchart or block diagrams may represent a module, segment, or portion of instructions, which comprises one or more executable instructions for implementing the specified operations.

In some alternative implementations, the operations noted in the blocks may occur out of the order noted in the figures. For example, two blocks shown in succession may be executed substantially concurrently, or the blocks may sometimes be executed in the reverse order, depending upon the functionality involved. In other examples, blocks may be performed generally in increasing numeric order while in still other examples, one or more blocks may be performed in varying order with the results being stored and utilized in subsequent or other blocks that do not immediately follow. It will also be noted that each block of the block diagrams and/or flowchart illustration, and combinations of blocks in the block diagrams and/or flowchart illustration, may be implemented by special purpose hardware-based systems that perform the specified functions or acts or carry out combinations of special purpose hardware and computer instructions.

The corresponding structures, materials, acts, and equivalents of all means or step plus function elements that may be found in the claims below are intended to include any structure, material, or act for performing the function in combination with other claimed elements as specifically claimed.

## Claims

1. A system, comprising:
a performance simulator to simulate modeled functional block (fub) objects from an integrated circuit (IC) and generate a performance profile including time-cycled performance values; and
a physical simulator including a power estimation engine to generate power values for the Fub objects and a thermal estimation engine to generate temperature data for the fub objects based on the generated power values, wherein the power and thermal estimation engines are coupled together to iteratively generate resultant power and temperature values for the fub object.

2. The system of claim 1, wherein the performance simulator is to execute test instruction traces translated from one or more test programs.

3. The system of any of claims 1-2, wherein the time-cycled performance values include micro-architectural counter values.

4. The system of any of claims 1-3, wherein the time-cycled performance values include dynamic capacitance values.

5. The system of any of claims 1-4, wherein the thermal estimation engine includes test station models for modeling a physical test station.

6. The system of claim 5, wherein the test station models include test head models to model thermal parameters based on geometry and materials for a physical test head that is to be mounted with the integrated circuit.

7. The system of claim 6, wherein the test station models include temperature control parameters for heaters and coolers used with the physical test head.

8. The system of any of claims 1-7, wherein the power values include both dynamic and leakage power values.

9. The system of any of claims 1-8, wherein the physical simulator is to generate a temperature grid graph of at least a portion of the integrated circuit based on the resultant temperature values.

10. The system of claim 9, wherein the temperature grid graph is to generate temperature pixel information corresponding to regions of the integrated circuit less than 40 square microns.

11. A method, comprising:
injecting instruction traces into an integrated circuit (IC) performance simulator to generate a performance profile;
generating equivalent timed sequenced dynamic capacitance values for functional block objects of the IC based on the performance profile;
generating power estimates using the performance profile and dynamic capacitance estimates;
generating temperature estimates for the functional blocks using one or more physical test station models based on the power estimates;
iteratively generating subsequent power and temperature values, wherein the subsequent power values are based on the subsequent temperature values, and the subsequent temperature values are based on the subsequent power values; and
identifying resultant power and temperature values from the subsequent power and temperature values.

12. The method of claim 11, wherein the power estimates are based on dynamic and static power estimates.

13. The method of any of claims 11-12, wherein generating power estimates using the performance profile and dynamic capacitance estimates includes using a sub-time slice of the performance profile.

14. The method of any of claims 11-13, wherein the performance profile includes micro-architectural counter values.

15. The method of any of claims 11-14, comprising decoding test sequence code into fub model executable instruction traces.
